Europäisches Patentamt

European Patent Office

Office européen des brevets

(11) Publication number : **0 468 772 A1**

# (12) EUROPEAN PATENT APPLICATION

(21) Application number : **91306758.3**

(22) Date of filing : **24.07.91**

(51) Int. Cl.⁵ : **C08L 81/02, C08L 67/00, C08K 5/54**

(30) Priority : **25.07.90 JP 197003/90**

(43) Date of publication of application :
**29.01.92 Bulletin 92/05**

(84) Designated Contracting States :
**AT BE CH DE DK ES FR GB GR IT LI LU NL SE**

(71) Applicant : **POLYPLASTICS CO. LTD.**
**3-13, Azuchicho, 2-chome**
**Chuo-Ku Osaka-shi Osaka 541 (JP)**

(72) Inventor : **Serizawa, Hajime**
**21-4, Sankeidai**
**Mishima-shi, Shizuoka (JP)**
Inventor : **Kubota, Masaru**
**976-5, Hoshiyama**
**Fujinomiya-shi, Shizuoka (JP)**
Inventor : **Sano, Hiroyuki**
**855-11, Miyajima**
**Fuji-shi, Shizuoka (JP)**

(74) Representative : **Jackson, Peter et al**
**HYDE, HEIDE & O'DONNELL 10-12 Priests**
**Bridge**
**London SW15 5JE (GB)**

(54) **Polyarylene sulfide resin composition and process for the preparation of the same.**

(57)   A polyarylene sulfide resin composition with improved toughness, impact resistance and heat resistance is produced by mixing (A), (B) and (C) while being heat-melted for at least 30 seconds. The composition comprises
    (A) 97 to 20 parts by weight of a polyarylene sulfide resin
and
    (B) 3 to 80 parts by weight of a polyester resin with
    (C) 0.01 to 5 parts by weight of at least one alkoxysilane compound selected from the group consisting of vinylalkoxysilane, epoxyalkoxysilane, aminoalkoxysilane, mercaptoalkoxysilane and allylalkoxysilane or a partial hydrolyzate thereof. Optionally the composition can also include
    (D) 0 to 400 parts by weight of one or more fillers selected from among fibrous, powdery and flaky ones.

EP 0 468 772 A1

The present invention relates to an improved polyarylene sulfide resin composition and a process for the preparation thereof.

More particularly, the present invention relates to a polyarylene sulfide resin composition which comprises a polyarylene sulfide resin, a polyester resin, an alkoysilane compound and, if necessary, a filler and to a process for the preparation thereof. The composition has excellent mechanical properties, especially in its toughness, impact resistance and heat resistance.

Thermoplastic resins with high resistance to heat and chemical attack and with excellent flame retardance have come to be demanded as the materials for components of electrical or electronic appliances, automobile devices or chemical instruments.

A polyarylene sulfide resin represented by polyphenylene sulfide is one of the resins which satisfy this demand and is moreover inexpensive such that the level of demand therefor has increased. Polyarylene sulfide resin, however, has a fundamental disadvantage in that it has poor toughness and is brittle, making it inferior to other engineering plastics such as nylon, polycarbonate, polyacetal and polybutylene terephthalate. The addition of a fibrous reinforcement such as glass fiber or carbon fiber has been known as a means for considerably improving the resin in various features such as strength, stiffness, toughness and heat resistance and thus to overcome the above disadvantage. However, while a composition prepared by adding such a fibrous filler to a polyarylene sulfide resin has excellent chemical resistance, heat resistance and flame retardance it is still inferior to other engineering plastics owing to its brittleness, so that the application of the composition to various fields is restricted.

Also, although the impact resistance of a polyarylene sulfide resin can be effectively improved by blending the resin with a soft polymer, a means of improving the mechanical and physical properties (such as toughness and impact resistance) of a polyarylene sulfide resin composition without impairing the features inherent in a polyarylene sulfide resin has been found as yet, because there are few polymers which are both soft and excellent in heat- and chemical-resistance and because such polymers have poor compatibility with the polyarylene sulfide resin. Although the combination of a polyarylene sulfide resin with a polyester exhibits relatively high compatibility and has been proposed in, e.g., Japanese Patent Laid-Open Nos. 168945/1982 and 58052/1984, it is still insufficient and therefore a further improvement in the toughness and impact resistance of the resin has been required.

The inventors of the present invention have made intensive studies into improving the toughness of a polyarylene sulfide resin, by means of a blend comprising a polyarylene sulfide resin and a polyester resin. Special attention was paid to the reactive terminals of both of the resins and to substances which are reactive with both of the resins under such conditions as to cause no significant cleavage of the resins' backbone chains. The present invention has been accomplished on the basis of their finding that a practically useful material which exhibits high toughness and has excellent mechanical strength, particularly impact resistance, can be obtained by kneading a silane compound having an alkoxysilane group in its molecule together with a polyarylene sulfide resin and a polyester resin at a specified temperature for a specified time.

Namely, the present invention relates to a polyarylene sulfide resin composition prepared by making 100 parts by weight of a resin component comprising:

(A) 97 to 20 parts by weight of a polyarylene sulfide resin

and

(B) 3 to 80 parts by weight of a polyester resin with

(C) 0.01 to 5 parts by weight of at least one alkoxysilane compound selected from the group consisting of vinylalkoxysilane, epoxyalkoxysilane, aminoalkoxysilane, mercaptoalkoxysilane and allylalkoxysilane or a partial hydrolyzate thereof.

The composition preferably also includes

(D) 0 to 400 parts by weight of one or more fillers selected from among fibrous, powdery and flaky ones.

The invention also provides a process for the preparation of a polyarylene sulfide resin composition as defined above, characterized by kneading a mixture comprising at least the components (A), (B) and (C) under heat melting for at least 30 seconds.

The polyarylene sulfide resin to be used in the present invention as the component (A) is mainly constituted of repeating units represented by the formula -(Ar-S)-[wherein Ar is an arylene group].

Examples of the arylene group include p-phenylene, m-phenylene, o-phenylene and substituted phenylene groups (wherein the substituent is an alkyl group preferably having 1 to 5 carbon atoms or a phenyl group), p,p′-diphenylene sulfone, p,p′-biphenylene, p,p′-diphenylene ether, p,p′-diphenylene carbonyl and naphthalene groups.

Although an arylene sulfide homopolymer constituted of the same repeating units among the arylene sulfide groups described above may be used in the present invention, the use of a copolymer constituted of a plurality of repeating units different from each other is preferred in some embodiments of the invention in respect of the processability of the resulting composition.

In those embodiments of the invention in which an arylene sulfide homopolymer is employed this is preferably a substantially linear homopolymer composed of p-phenylene sulfide repeating units.

In those embodiments of the invention in which an arylene sulfide copolymer is employed this may be any one constituted of two or more repeating units different from each other selected from among the arylene sulfide units mentioned above. Particularly, a copolymer comprising p-phenylene sulfide units as a major component together m-phenylene sulfide units is preferably used. More particularly, it is suitable in respect of heat resistance, moldability, mechanical characteristics and so on to use a substantially linear copolymer comprising at least 60 molar %, more preferably at least 70 molar %, of p-phenylene sulfide units.

Further, it is preferable that the copolymer contain 5 to 40 molar %, more preferably 10 to 25 molar %, of m-phenylene sulfide units.

Among such copolymers, a block copolymer (for example, one disclosed in Japanese Patent Laid-Open No. 14228/1986) is preferred to a random one, because the former is superior to the latter in processability, heat resistance and mechanical properties.

The polyarylene sulfide resin to be used in the present invention as the component (A) may be a polymer which has been improved in processability for molding by crosslinking the polymer as described above oxidatively or thermally to increase its melt viscosity or may be a substantially linear polymer prepared by the polycondensation of a monomer component mainly comprising a difunctional monomer. In many cases, the latter polymer is superior to the former in respect of the physical properties of the resulting molded article.

According to the present invention, a resin composition prepared by blending a crosslinked sulfide resin prepared from a monomer having at least three functional groups as a part of the monomer component with the linear polymer described above may be suitably used.

The polyester resin to be used in the present invention as the component (B) is a polyester made from a dicarboxylic acid or its ester-forming derivative and a glycol. The dicarboxylic acid includes terephthalic, isophthalic, naphthalenedicarboxylic, 4,4'-diphenyldicarboxylic and diphenyl ether dicarboxylic acids, $\alpha,\beta$-bis-(4-carboxyphenoxy)-ethane, and adipic, sebacic, azelaic, decanedicarboxylic, dodecanedicarboxylic, cyclohexanedicarboxylic and dimer acids, while the glycol includes ethylene glycol, propylene glycol, butanediol, pentanediol, neopentyl glycol, hexanediol, octanediol, decanediol, cyclohexanedemethanol, hydroquinone, bisphenol A, 2,2-bis(4'-hydroxy-ethoxyphenyl)propane, xylene glycol, polyethylene ether glycol, polytetramethylene ether glycol and aliphatic polyester oligomer having terminal hydroxyl groups. The polyester may be either a homopolyester or a copolyester.

The comonomer component constituting the copolyester to be used in the present invention includes hydroxy carboxylic acids such as glycolic acid, hydroxy acid, hydroxybenzoic acid, hydrooxyphenylacetic acid and naphthylglycolic acid; and lactones such as propiolactone, butyrolactone, caprolactone, valerolactone and caprolactone. Further, the polyester to be used may be a branched or crosslinked one prepared by using a polyfunctional ester-forming component such as trimethylolpropane, trimethylolethane, pentaerythritol, trimellitic acid, trimesic acid or pyromellitic acid in such a range as to retain its thermoplasticity.

Further, the polyester to be used in the present invention may be a halogenated copolyester prepared from an aromatic compound having a halogen substituent on the aromatic nucleus and ester-forming groups, for example, dibromoterephthalic acid, tetrabromoterephthalic acid, tetrachloroterephthalic acid, 1,4-dimethyloltetrabromobenzene, tetrabromobisphenol A or an adduct of tetrabromobisphenol A with ethylene oxide or propylene oxide.

Furthermore, a polyester elastomer which is a block copolymer comprising a high-melting hard segment and a low-melting soft segment may be also used as the component (B) in the present invention. The polyester elastomer is, for example, a block copolymer comprising a hard segment mainly composed of alkylene terephthalate units and a soft segment composed of aliphatic polyester or polyether.

The above-mentioned polyester resins may be used alone or as a mixture of two or more of them as the component (B). Particularly preferable examples of the polyester resin include polyethylene terephthalate, polybutylene terephthalate and copolymers mainly composed of them. Preferable examples of the comonomer constituting the copolymers include isophthalic acid, bisphenol A, 2,2-bis($\beta$-hydroxyethoxyphenyl)propane and 2,2-bis($\beta$-hydroxyethoxytetrabromophenyl)propane.

Although the amount of the polyester resin to be used as the component (B) varies depending upon the use of the composition, the polyarylene sulfide resin and the polyester resin should be used in amounts of 97 to 20 parts by weight and 3 to 80 parts by weight, respectively, and preferably in amounts of 90 to 20 parts by weight and 10 to 80 parts by weight, respectively. If the amount of the polyester resin is less than 3 parts by weight, the resulting composition will not be sufficiently improved in toughness, while if it exceeds 80 parts by weight, the thermal deformation temperature of the resulting composition will be unfavorably reduced.

The present invention is characterised by using an alkoxysilane compound (C) in addition to the above resins.

The alkoxysilane compound to be used as the component (C) in the present invention is one or more members selected from among vinylalkoxysilane, epoxyalkoxysilane, aminoalkoxysilane, mercaptoalkoxysilane and allylalkoxysilane.

Examples of the vinylalkoxysilane include vinyltriethoxysilane, vinyltrimethoxysilane and vinyltris($\beta$-methoxyethoxy)silane.

Examples of the epoxyalkoxysilane include $\Upsilon$-glycidoxypropyltrimethoxysilane, $\Upsilon$-(3,4-epoxycyclohexyl)ethyltrimethoxysilane and $\Upsilon$-glycidoxypropyltriethoxysilane.

Examples of the aminoalkoxysilane include $\Upsilon$-aminopropyltrimethoxysilane, $\Upsilon$-aminopropyltriethoxysilane, $\Upsilon$-aminopropylmethyldimethoxysilane, $\Upsilon$-aminopropylmethyldiethoxysilane, N-($\beta$-aminoethyl)-$\Upsilon$-aminopropyltrimethoxysilane and N-phenyl-$\Upsilon$aminopropyltrimethoxysilane.

Examples of the mercaptoalkoxysilane include $\Upsilon$-mercaptopropyltrimethoxysilane and $\Upsilon$-mercaptopropyltriethoxysilane.

Examples of the allylalkoxysilane include $\Upsilon$-diallylaminopropyltrimethoxysilane, $\Upsilon$-allylaminopropyltrimethoxysilane and $\Upsilon$-allylthiopropyltrimethoxysilane.

The amount of the alkoxysilane compound to be used as the component (C) is 0.01 to 5 parts by weight, preferably 0.1 to 3 parts by weight, per 100 parts by weight of the total amount of the polyarylene sulfide resin (A) and the polyester resin (B).

When the amount of the alkoxysilane compound is too small, the resulting composition will be hardly improved in toughness, while when it is too large, the resulting composition will be viscous and thus cause problems in molding, though the optimum amount varies depending upon the kind of the alkoxysilane used and the use of the resulting composition.

The alkoxysilane compound to be used as the component (C) may be one wherein part of the reactive alkoxy groups are hydrolyzed. The presence of a minute amount (for example, up to 10 mole % based on the alkoxysilane) of water is rather preferable in some cases.

Although the filler (D) is not necessarily an essential component in the present invention, the addition thereof is preferred for producing a molded article which is excellent in mechanical strength, heat resistance, dimensional stability, electrical properties and other performances. The filler (D) may be selected from among fibrous, powdery and flaky ones depending upon the object.

Suitable fibrous fillers include inorganic fibrous materials, for example, glass fiber, asbestos fiber, carbon fiber, silica fiber, silica/alumina fiber, zirconia fiber, boron nitride fiber, silicon nitride fiber, boron fiber and potassium titanate fiber, and fibers of metals such as stainless steel, aluminium, titanium, copper or brass.

Among them, glass fiber and carbon fiber are most representative. Further, suitable fibrous fillers include high-melting organic fibrous materials, particular examples thereof being polyamides, fluororesins and acrylic resins.

Suitable powdery fillers include carbon black, silica, quartz powder, glass beads, glass powder, silicates such as calcium silicate, aluminium silicate, kaolin, talc, clay, diatomaceous earth and wollastonite, metal oxides such as iron oxide, titanium oxide and alumina; metal carbonates such as calcium carbonate and magnesium carbonate; metal sulfates such as calcium sulfate and barium sulfate; silicon carbide, silicon nitride, boron nitride and various metal powders.

Suitable flaky fillers include mica, glass flake and various metal foils.

These inorganic fillers may be used alone or as a mixture of two or more of them. The simultaneous use of a fibrous filler, particularly glass or carbon fiber with a powdery or flaky filler is particularly effective in producing an article which is excellent not only in mechanical strength but also in dimensional accuracy and electrical properties.

The amount of the inorganic filler is at most 400 parts by weight per 100 parts by weight of the total amount of the resins (A) and (B). If the amount exceeds 400 parts by weight, the resulting composition will be poor in molding processability and in toughness. The use thereof in an amount of 250 parts by weight or below is particularly preferable.

Although the composition of the present invention can be prepared by various known processes, a mixture comprising at least the three components (A), (B) and (C) must be heat-melted and kneaded for at least 30 seconds. The component (D) and/or other components may be added either in this heat melting and kneading step together with the above three components or in other steps. For example, the composition can be prepared by homogeneously mixing the components (A), (B), (C) and (D) together with a mixing machine such as a tumbler or Henschel mixer and melt-kneading the obtained mixture with a single- or twin-screw extruder to obtain pellets. In this preparation, it is preferably to employ a process which comprises pulverizing a part or the whole of the components (A) and (B), homogeneously mixing the obtained powder with the component (C) with a blender, mixing the obtained mixture with the residual components and melt-kneading the obtained mixture. Alternatively, the component (D) may be added during or after the melt-kneading. Particularly, it is preferable to add the component (D) after the completion of the reaction of the resin component with the component (C) under melt-kneading, because such addition tends to be more effective in improving toughness.

The melt-kneading is conducted at a temperature higher than the melting point of the resin component by 5 to 100°C, preferably 10 to 60°C. Melt-kneading at too high a temperature unfavorably causes decomposition and abnormal reactions.

Although the melt-kneading time varies depending upon the kneading temperature or the kind or amount of the silane compound, it is 30 seconds to 15 minutes, preferably 1 to 10 minutes.

Although the mechanism of the function and effect of the alkoxysilane compound according to the present invention has not been sufficiently elucidated, the function and effect are inferred to be resulting from the molecular weight increased by the bonding the polyarylene sulfide resin (A) to the polyester resin (B) through the silane compound (C) and the compatibility between the resins (A) and (B) improved by the bonding. This inference is supported by the results of the electron microscopy of the sectional phase structure of a molded article made of the composition. Namely, when the silane compound is coexistant, the polyester resin can be dispersed in a state of fine particle (at most 5 μm, generally 2 to 1 μm or below), while when the compound is absent, the polyester resin is dispersed in a state of coarse particle (10 μm or above).

The composition of the present invention may further contain conventional additives so far as the use thereof does not harm the object of the present invention. Examples of such further additives include antioxidants, heat stabilizers, lubricants, nucleating agents, ultraviolet absorbers, coloring agents, mold release agents and so forth. Further, a small amount of another thermoplastic resin may be added to the composition as an auxiliary component.

These additives may be added either during the melt kneading described above or in some other steps.

As described above, the polyarylene sulfide resin composition is excellent in the dispersibility of the resins (A) and (B) in each other to exhibit the following effects:

(1) a molded article made of the composition is considerably improved in mechanical properties such as tensile elongation and impact resistance,

(2) the mechanical characteristics and heat resistance of the composition are well balanced, and

(3) a molded article made of the composition is excellent in appearance such as gloss.

Examples

The present invention will now be described in more detail by referring to the following non-limiting Examples.

Examples 1 to 5 and Comparative Examples 1 and 2

40 parts by weight of a polybutylene terephthalate resin (PBT) (a product of Polyplastics, DURANEX 2002) was added to 60 parts by weight of a polyphenylene sulfide polymer (PPS) (m.p.: 285°C, melt viscosity: 500 P as determined at 310°C and a shear rate of 1200 sec$^{-1}$) to give a blend. Υ-Aminopropyltriethoxysilane and, if necessary, a glass fiber (chopped strand having a diameter of 10 μm and a length of 3 mm) each in amounts specified in Table 1 were added to the blend, followed by the premixing in a Henschel mixer for 5 minutes. The obtained premix was melt-kneaded with an extruder at a cylinder temperature of 310°C (residence time: about 2 minutes) to give pellets of a polyphenylene sulfide resin composition.

These pellets were molded into an ASTM test piece with an injection molding machines at a cylinder temperature of 310°C and a mold temperature of 150°C. This test piece was subjected to tensile, impact and thermal deformation tests. Further, the surface appearance (particularly glossO thereof was evaluated by the observation with the naked eye.

The results are given in Table 1.

Examples 6 to 9 and Comparative Examples 3 to 5

The same PPS resin as that used in the foregoing Examples and comparative Examples was mixed with a PBT resin, Υ-aminopropyltriethoxysilane and, if necessary, a glass fiber each in amounts specified in Table 2. The subsequent steps were conducted in a similar manner to that of Examples 1 to 5.

The results are given in Table 2.

Examples 10 to 17

A blend comprising 60 parts by weight of a PPS polymer and 40 parts by weight of a PBT resin, both of which are the same as those used above, was mixed with Υ-glycidoxypropyltrimethoxysilane, Υ-mercaptopropyltrimethoxysilane, vinvyltrimethoxysilane or Υ-diallylaminopropyltrimethoxysilane and, if necessary, a glass fiber each in amounts specified in Table 3. The subsequent steps were conducted in a similar manner to that of Examples 1 to 5.

The results are given in Table 3

Examples 18 to 22 and Comparative Examples 6 and 7

The same procedures as those of Examples 1 to 5 and Comparative Examples 1 and 2 were each repeated except that the PBT resin was replaced by a polyethylene terephthalate resin (PET) (a product of Toray Industries, Inc., grade J015)

The results are given in Table 4.

Examples 23 to 26 and Comparative Example 8

The same procedures as those of Examples 6 to 9 and Comparative Example 4 were each repeated except that the PBT resin was replaced by a PET resin.

The results are given in Table 5.

Examples 27 to 34

The same procedures as those of Examples 10 to 17 were each repeated except that the PBT resin was replaced by a PET resin.

The results are given in Table 6.

Table 1

| | | Comp. Ex. 1 | Ex. 1 | Ex. 2 | Ex. 3 | Ex. 4 | Comp. Ex. 2 | Ex. 5 |
|---|---|---|---|---|---|---|---|---|
| Composition (pts. by wt.) | PPS resin | 60 | 60 | 60 | 60 | 60 | 60 | 60 |
| | PBT resin | 40 | 40 | 40 | 40 | 40 | 40 | 40 |
| | γ-aminopropyl-triethoxysilane | – | 0.1 | 0.5 | 1.0 | 2.0 | – | 2.0 |
| | glass fiber | – | – | – | – | – | 67 | 67 |
| Properties of composition | tensile strength [kgf/cm²] | 360 | 400 | 460 | 570 | 600 | 1450 | 2010 |
| | tensile elongation [%] | 4.0 | 4.2 | 4.7 | 5.5 | 6.0 | 1.4 | 4.5 |
| | Izod impact strength (kgcm/cm) notched | 1.2 | 1.4 | 1.8 | 2.6 | 2.8 | 5.0 | 10.0 |
| | Izod impact strength (kgcm/cm) unnotched | 13 | 16 | 21 | 29 | 32 | 20 | 43 |
| | thermal deformation temperature (°C) load: 18.6 kg | 116 | 116 | 115 | 114 | 111 | 250 | 245 |
| | surface gloss of molded article | glossy | glossy | glossy | glossy | glossy | glossy | glossy |

EP 0 468 772 A1

Table 2

| | | Comp. Ex. 3 | Ex. 6 | Ex. 7 | Ex. 1 | Ex. 8 | Comp. Ex. 4 | Comp. Ex. 5 | Ex. 9 | Ex. 5 |
|---|---|---|---|---|---|---|---|---|---|---|
| Composition (pts. by wt.) | PPS resin | 100 | 90 | 80 | 60 | 40 | – | 100 | 80 | 60 |
| | PBT resin | – | 10 | 20 | 40 | 60 | 100 | – | 20 | 40 |
| | γ-aminopropyl-triethoxysilane | 2.0 | 2.0 | 2.0 | 2.0 | 2.0 | 2.0 | 2.0 | 2.0 | 2.0 |
| | glass fiber | – | – | – | – | – | – | 67 | 67 | 67 |
| Properties of composition | tensile strength (kgf/cm²) | 660 | 660 | 630 | 600 | 550 | 530 | 1750 | 1900 | 2010 |
| | tensile elongation (%) | 2.4 | 2.6 | 3.7 | 6.0 | 7.0 | 5.0 | 1.5 | 3.3 | 4.5 |
| | Izod impact strength (kgcm/cm) notched | 1.2 | 1.4 | 2.1 | 2.8 | 3.3 | 4.4 | 8.9 | 9.5 | 10.0 |
| | Izod impact strength (kgcm/cm) unnotched | 7 | 10 | 20 | 32 | 37 | – | 30 | 37 | 43 |
| | thermal deformation temperature (°C) load: 18.6 kg | 116 | 115 | 113 | 111 | 97 | 60 | 260 | 248 | 245 |
| | surface gloss of molded article | poorly glossy | glossy | glossy | glossy | glossy | glossy | poorly glossy | glossy | glossy |

EP 0 468 772 A1

Table 3

| | | Comp. Ex. 1 | Ex. 10 | Ex. 11 | Ex. 12 | Ex. 13 | Comp. Ex. 2 | Ex. 14 | Ex. 15 | Ex. 16 | Ex. 17 |
|---|---|---|---|---|---|---|---|---|---|---|---|
| Composition (pts. by wt.) | PPS resin | 60 | 60 | 60 | 60 | 60 | 60 | 60 | 60 | 60 | 60 |
| | PBT resin | 40 | 40 | 40 | 40 | 40 | 40 | 40 | 40 | 40 | 40 |
| | γ-glycidoxypropyl-trimethoxysilane | - | 2 | - | - | - | - | 2 | - | - | - |
| | γ-mercaptopropyl-trimethoxysilane | - | - | 2 | - | - | - | - | 2 | - | - |
| | vinyltrimethoxysilane | - | - | - | 2 | - | - | - | - | 2 | - |
| | γ-diallylaminopropyl-trimethoxysilane | - | - | - | - | 2 | - | - | - | - | 2 |
| | glass fiber | - | - | - | - | - | 67 | 67 | 67 | 67 | 67 |
| Properties of composition | tensile strength [kgf/cm²] | 360 | 590 | 550 | 570 | 590 | 1450 | 1980 | 1930 | 1950 | 1980 |
| | tensile elongation [%] | 4.0 | 5.8 | 5.4 | 5.6 | 5.8 | 1.4 | 4.4 | 3.5 | 4.2 | 4.5 |
| | Izod impact strength [kgcm/cm] notched | 1.2 | 2.6 | 2.2 | 2.4 | 2.7 | 5.0 | 9.8 | 9.5 | 9.6 | 9.7 |
| | Izod impact strength [kgcm/cm] unnotched | 13 | 30 | 26 | 28 | 30 | 20 | 40 | 37 | 38 | 40 |
| | thermal deformation temp. [°C] load: 18.6 kg | 116 | 111 | 111 | 111 | 111 | 250 | 245 | 245 | 245 | 245 |
| | surface gloss of molded article | glossy | glossy | glossy | glossy | glossy | glossy | glossy | glossy | glossy | glossy |

9

Table 4

| | | Comp. Ex. 6 | Ex. 18 | Ex. 19 | Ex. 20 | Ex. 21 | Comp. Ex. 7 | Ex. 22 |
|---|---|---|---|---|---|---|---|---|
| Composition (pts. by wt.) | PPS resin | 60 | 60 | 60 | 60 | 60 | 60 | 60 |
| | PBT resin | 40 | 40 | 40 | 40 | 40 | 40 | 40 |
| | γ-aminopropyl-triethoxysilane | − | 0.1 | 0.5 | 1.0 | 2.0 | − | 2.0 |
| | glass fiber | − | − | − | − | − | 67 | 67 |
| Properties of composition | tensile strength $[kgf/cm^2]$ | 500 | 520 | 570 | 620 | 640 | 1500 | 2120 |
| | tensile elongation (%) | 3.0 | 3.2 | 4.6 | 6.0 | 7.0 | 1.6 | 5.0 |
| | Izod impact strength (kgcm/cm) notched | 1.3 | 1.5 | 2.1 | 2.8 | 3.0 | 5.3 | 10.5 |
| | Izod impact strength (kgcm/cm) unnotched | 9 | 10 | 21 | 33 | 36 | 23 | 46 |
| | thermal deformation temperature (°C) load: 18.6 kg | 117 | 117 | 116 | 115 | 112 | 245 | 250 |
| | surface gloss of molded article | glossy | glossy | glossy | glossy | glossy | glossy | glossy |

Table 5

| | | Comp. Ex. 3 | Ex. 23 | Ex. 24 | Ex. 21 | Ex. 25 | Comp. Ex. 8 | Comp. Ex. 5 | Ex. 26 | Ex. 22 |
|---|---|---|---|---|---|---|---|---|---|---|
| Composition (pts. by wt.) | PPS resin | 100 | 90 | 80 | 60 | 40 | – | 100 | 80 | 60 |
| | PBT resin | – | 10 | 20 | 40 | 60 | 100 | – | 20 | 40 |
| | γ-aminopropyl-triethoxysilane | 2.0 | 2.0 | 2.0 | 2.0 | 2.0 | 2.0 | 2.0 | 2.0 | 2.0 |
| | glass fiber | – | – | – | – | – | – | 67 | 67 | 67 |
| Properties of composition | tensile strength (kgf/cm²) | 660 | 660 | 650 | 640 | 600 | 560 | 1750 | 1930 | 2120 |
| | tensile elongation (%) | 2.4 | 3.1 | 5.0 | 7.0 | 8.0 | 50 | 1.5 | 3.3 | 5.0 |
| | Izod impact strength (kgcm/cm) notched | 1.2 | 1.5 | 2.2 | 3.0 | 3.6 | 1.4 | 8.9 | 9.7 | 10.5 |
| | unnotched | 7 | 12 | 24 | 36 | 40 | – | 30 | 40 | 46 |
| | thermal deformation temperature (°C) load: 18.6 kg | 116 | 116 | 114 | 112 | 98 | 40 | 260 | 246 | 250 |
| | surface gloss of molded article | poorly glossy | glossy | glossy | glossy | glossy | glossy | poorly glossy | glossy | glossy |

Table 6

| | | Comp. Ex. 6 | Ex. 27 | Ex. 28 | Ex. 29 | Ex. 30 | Comp. Ex. 7 | Ex. 31 | Ex. 32 | Ex. 33 | Ex. 34 |
|---|---|---|---|---|---|---|---|---|---|---|---|
| Composition (pts. by wt.) | PPS resin | 60 | 60 | 60 | 60 | 60 | 60 | 60 | 60 | 60 | 60 |
| | PBT resin | 40 | 40 | 40 | 40 | 40 | 40 | 40 | 40 | 40 | 40 |
| | γ-glycidoxypropyl-trimethoxysilane | – | 2 | – | – | – | – | 2 | – | – | – |
| | γ-mercaptopropyl-trimethoxysilane | – | – | 2 | – | – | – | – | 2 | – | – |
| | vinyltrimethoxysilane | – | – | – | 2 | – | – | – | – | 2 | – |
| | γ-diallylaminopropyl-trimethoxysilane | – | – | – | – | 2 | – | – | – | – | 2 |
| | glass fiber | – | – | – | – | – | 67 | 67 | 67 | 67 | 67 |
| Properties of composition | tensile strength [kgf/cm²] | 500 | 630 | 600 | 610 | 630 | 1500 | 2100 | 2030 | 2050 | 2090 |
| | tensile elongation [%] | 3.0 | 6.8 | 6.0 | 6.5 | 6.7 | 1.6 | 4.9 | 4.6 | 4.7 | 4.9 |
| | Izod impact strength [kgcm/cm] notched | 1.3 | 2.8 | 2.3 | 2.5 | 2.7 | 5.3 | 10.3 | 9.8 | 10.0 | 10.3 |
| | Izod impact strength [kgcm/cm] unnotched | 9 | 34 | 28 | 30 | 33 | 23 | 44 | 42 | 43 | 45 |
| | thermal deformation temp. [°C] load: 18.6 kg | 117 | 112 | 112 | 112 | 112 | 245 | 250 | 250 | 250 | 250 |
| | surface gloss of molded article | glossy | glossy | glossy | glossy | glossy | glossy | glossy | glossy | glossy | glossy |

## Claims

1. A polyarylene sulfide resin composition prepared by mixing 100 parts by weight of a resin component comprising

   (A) 97 to 20 parts by weight of a polyarylene sulfide resin,

   and

   (B) 3 to 80 parts by weight of a polyester resin, with

   (C) 0.01 to 5 parts by weight of at least one alkoxysilane compound selected from the group consisting of vinylalkoxysilane, epoxyalkoxysilane, aminoalkoxysilane, mercaptoalkoxysilane and allylalkoxysilane or a partial hydrolyzate thereof.

2. A polyarylene sulfide resin composition as claimed in claim 1, in which the polyarylene sulfide (A) is a substantially linear homopolymer composed of p-phenylene sulfide repeating units.

3. A polyarylene sulfide resin composition as claimed in claim 1, in which the polyarylene sulfide (A) is a substantially linear copolymer comprising at least 60 molar % of p-phenylene sulfide units and 5 to 40 molar % of m-phenylene sulfide units.

4. A polyarylene sulfide resin composition as claimed in claim 3, in which the polyarylene sulfide (A) is a substantially linear copolymer comprising at least 70 molar % of p-phenylene sulfide units and 10 to 25 molar % of m-phenylene sulfide units.

5. A polyarylene sulfide resin composition as claimed in any preceding claim, in which the polyester resin (B) is a block copolymer comprising a high-melting hard segment and a low-melting soft segment.

6. A polyarylene sulfide resin composition as claimed in claim 5, in which the block copolymer comprises a hard segment mainly composed of alkylene terephthalate units and a soft segment composed of aliphatic polyester or polyether.

7. A polyarylene sulfide resin composition as claimed in any preceding claim, in which the amounts of the polyarylene sulfide resin (A) and the polyester resin (B) are 90 to 20 parts by weight and 10 to 80 parts by weight, respectively.

8. A polyarylene sulfide resin composition as claimed in any preceding claim, which further comprises

   (D) 0 to 400 parts by weight of one or more fillers selected from among fibrous, powdery and flaky fillers.

9. A process for the preparation of a polyarylene sulfide resin composition, characterized by kneading a mixture comprising at least the components (A), (B) and (C) as set forth in any preceding claim under heat melting for at least 30 seconds.

10. A process as claimed in claim 9, in which the melt-kneading is conducted at a temperature higher than the melting point of the resin component(s) by 10 to 60°C.

European Patent
Office

**EUROPEAN SEARCH REPORT**

Application Number

EP 91 30 6758

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 090 922 (BAYER) <br> * Example 11; table 3; claims 1-6 * <br> --- | 1-3,7-10 | C 08 L 81/02 <br> C 08 L 67/00 <br> C 08 K 5/54 |
| Y | EP-A-0 286 257 (POLYPLASTICS) <br> * Column 3, lines 3-24; examples; claims * <br> --- | 1-3,7-10 | |
| A | WPIL, FILE SUPPLIER, AN=87-040992/06, Derwent Publications Ltd, London, GB; & JP-A-62 000 549 (DAINIPPON INK) 06-01-1987 <br> --- | | |
| A | US-A-4 284 549 (S. GIDEON) <br> --- | | |
| A | EP-A-0 230 047 (KANEGAFUCHI) <br> ----- | | |
| | | | **TECHNICAL FIELDS SEARCHED (Int. Cl.5)** <br><br> C 08 L <br> C 08 K |

The present search report has been drawn up for all claims

| Place of search | Date of completion of the search | Examiner |
|---|---|---|
| THE HAGUE | 25-09-1991 | KLIER E.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P0401)